(19) Europäisches Patentamt
European Patent Office
Office européen des brevets

(11) EP 2 397 982 A1

(12) EUROPEAN PATENT APPLICATION

(43) Date of publication:
21.12.2011 Bulletin 2011/51

(51) Int Cl.:
*G06Q 30/00* (2006.01)

(21) Application number: 10166301.1

(22) Date of filing: 17.06.2010

(84) Designated Contracting States:
AL AT BE BG CH CY CZ DE DK EE ES FI FR GB
GR HR HU IE IS IT LI LT LU LV MC MK MT NL NO
PL PT RO SE SI SK SM TR
Designated Extension States:
BA ME RS

(71) Applicant: Amadeus S.A.S.
06410 Biot (FR)

(72) Inventors:
• Angelini, Christophe
06130 Grasse (FR)

• Domicent, Jean-Francois
83440 Montauroux (FR)
• Angeras, Odile
06580 Pegomas (FR)

(74) Representative: Anderson, Angela Mary
Murgitroyd & Company
Immeuble Atlantis
55 Allée Pierre Ziller
Sophia Antipolis
06560 Valbonne (FR)

(54) **Improvements in or relating to the management and implementation of a payment scheme**

(57) A method of determining a set of recommendations of possible available entities, such as tickets, wherein the set of recommendations are available for presentation to a user and match at least one search criteria entered by the user, wherein the search is conducted via a third-party which has a predetermined relationship with a supplier of the possible available entities; the method comprising the steps of:

searching for a set of recommendations of possible available entities which match at least one search criteria entered by the user;

determining an incentive scheme between third-party and the supplier of the possible available entities for each possible available entity;

forecasting an incentive for the third-party based on a predetermined incentive scheme for each possible available entity.;

ordering the recommendations of possible available entities in an order based on the incentive for the third-party for presentation to the user.

Fig. 2

**Description**

Field of the invention

The present invention relates to a method and system for providing improvements relating to the management and implementation of a payment scheme, such as a commission payment scheme.

Background of the invention

With the currently available searching and booking tools a travel agent can search for the lowest fares matching a particular search request in a matter of seconds. A full validated search of available flights and lowest fares will result in several fare recommendations for an itinerary or journey. By identifying the lowest fares the travel agent's customers (the passenger) is provided with a high value service. However, due to the commission systems that operate within travel agencies and for different airlines and travel providers, the lowest fares for the passenger might not be the most appropriate for the travel agent to sell from a commission point of view. Incentives are provided by airlines to travel agents based on targets achieved within a specific timescale, which result in post sale commissions or payments. The incentive between each airline and each travel agent may be considerably different and there may be special offers at any time. The incentive schemes can be based on a variety of different measures, for example number or percentage of sales, rate of sales or any other appropriate and variable metric. The ability for a travel agent to manage and be aware of the available incentives is thus very important.

In addition, the travel agent needs to know of changes and possible impending targets or deadlines in order to maximise the possible commission or other incentives that are available. The commission levels are typically controlled by a complex agreement between the airline and travel agent. The complexity can make measurement and assessment of progress very difficult for the travel agent. At present the travel agents have to rely on their own home grown measurement systems or rely on luck and chance. The measurement of approaching targets is by far the greatest problem for large travel agent chains which have a large and dispersed workforce who all contribute to the targets and goals. By operating in this known way the travel agent may not know that they have missed a target until after the deadline, where new targets are imposed. If the target was close this can be very frustrating and commercially disadvantageous.

Objects of the invention

It is an object of the present invention to overcome at least some of the problems associated with the prior art.

It is a further object of the present invention to provide a method and system for managing the monitoring of possible incentives and searching based on incentive possibilities, for example, in the airline industry.

Summary of the invention

The present invention provides a method and system as set out in the accompanying claims.

According to one aspect of the present invention there is provided a method of determining a set of recommendations of possible available entities, such as tickets, wherein the set of recommendations are available for presentation to a user and match at least one search criteria entered by the user, wherein the search is conducted via a third-party which has a predetermined relationship with a supplier of the possible available entities; the method comprising the steps of:

    searching for a set of recommendations of possible available entities which match at least one search criteria entered by the user;
    determining an incentive scheme between third-party and the supplier of the possible available entities for each possible available entity; forecasting an incentive for the third-party based on a predetermined incentive scheme for each possible available entity;
    ordering the recommendations of possible available entities in an order based on the incentive for the third-party for presentation to the user.

The present invention provides a number of advantages. The invention guides the TA to book tickets on high-reward airline(s) and provides real offer on "yield management" for TAs. In addition the invention provides real time forecasting which is historical sales based, and which is versatile to be able to be developed based on knowledge and experience.

The invention provides an integrated low fare search tool or stand-alone solution plugged into another pricing system.

Brief description of the drawings

Reference will now be made, by way of example, to the accompanying drawings, in which:

Figure 1 is a block diagram of a system for the purchase of airline tickets, in accordance with an embodiment of the present invention,

Figure 2 is a set of graphs showing examples of incentive schemes, in accordance with an embodiment of the invention,

Figure 3 is a flow chart of a low fare search process, in accordance with an embodiment of the invention,

Figure 4 is a flow chart of TA incentive driven low fare search process, in accordance with an embodiment of the invention,

Figure 5 is a screen diagram showing information which is displayed to a travel agent, in accordance with an embodiment of the invention,

Figure 6 is a diagram showing fares for a search as presented to the travel agent, in accordance with an embodiment of the invention,

Figure 7 is diagram showing the fare details to present to the client, in accordance with an embodiment of the invention.

Detailed description of the preferred embodiments

The present invention relates to providing a low fare search display including availability information that also includes a new incentive calculation module which operates in real-time to calculate online an incentive for an itinerary fare. The incentives may be based on percentages or more complex functions and in the example presented below relate to incentives for travel agents provided by airlines in the determination of an incentive scheme for the sale of travel fares. The more complex function may be based on agency current sales achievements (as such a ticket/coupon historical database is a key module of the invention. The relationship between the travel agent and the airline which defines the incentive program to be applied to the incentive calculation module will be dependent on business rules. The business rules will take into account the different types of incentive program, whether they are long-term or short-term and where targets and deadlines are due. The incentive values are combined with the lowest fares and availability so that the travel agent is able to select the itinerary by finding the best incentives for him and the cheapest prices for the passenger. Where the travel agent has a number of different incentive schemes either operating with a single airline or with different airlines the module will be able to calculate and forecast the advantages of each and present this information to the travel agent in real-time to assist in decision-making. In principle it should not impact the passengers' ability to have low fares and good value deals, but will help the travel agents to determine the best revenue itinerary for themselves.

Current low fare search engines enable the travel agent to find the lowest available fare corresponding to requested itinerary, based on any passenger types or options. The recommendations from the low fare search engine may be biased according to airline preferences or to aid travel management company preferences so as to put forward travel solutions associated with different sales policies. Availability of the different recommendations is taken into account in order to reflect the revenue management policy of the airlines presented in the output. Similarly, recommendations biased according to travel management company preferences may also be taken into account. The optimisation of travel agent revenue based on incentive computation schemes and sales history whilst continuing to provide passenger choice is one advantage of the present invention.

The system and method could also apply to meta-search engines to maximise their "on click" revenue but again will offer a means by which the search can be carried out and biased in order to show information relating to commission in the highest results slots. The system and method could also apply to an availability display, or any kind of displays mentioned previously and may be used to sell other kinds of transportation tickets or other kinds of goods.

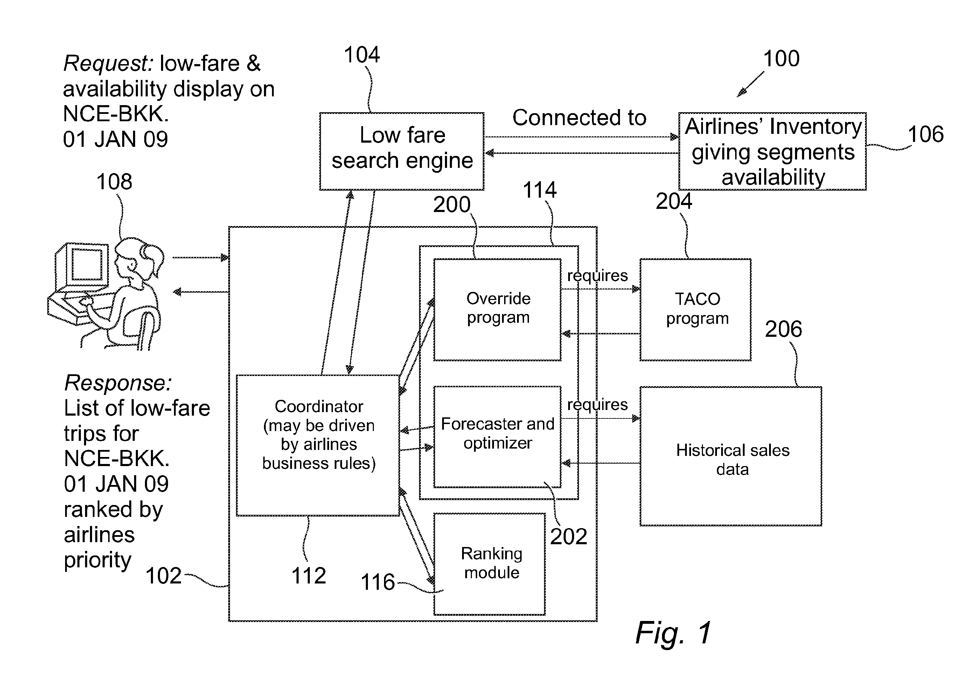

Referring to figure 1, a block diagram of the modules involved in the method and system of the present invention are shown. The system 100 includes a processing module 102 and a low fare search engine 104 connected to an airline inventory module 106. A travel agent 108 may be in communication with the processing system 102 when required to enter search criteria and obtain results from the system. The processing module 102 is also connected to a business logic module 110 which includes details of agent incentive agreements with different airlines. The processing module 102 includes a coordinator 112, which may be controlled by an airline's business rules. In addition, an incentive module 114 and ranking module 116 may also be provided in the processing module 102.

Essentially the incentive module 114 includes two main functionalities or modules: these are an incentive program or module 200 and a forecast optimizer program or module 202. The incentive program 200 is connected to a travel agency commission override (TACO) program or module 204. Override commissions are bonuses paid by an airline to a travel agent over and above the standard commissions that passes to the agent as a result of historical aggregated sales. The override commission is calculated when sales pass certain thresholds or performance levels. The override commission acts as a second incentive program or a bonus volume commission of the travel agent. The overall reward system for a travel agent is complex. Basic or standard commissions are paid based on a predetermined sales percentage. However in recent times this percentage is negligible and does not act as an incentive for travel agents today. The incentive commissions or overrides commissions of today are paid directly by the airline to the travel agent and are based on performance, targets and timescales. The override incentives tend to increment in a non-linear or step-wise fashion to provide greater incentives at greater levels of sales.

A travel agent may use many different airlines; as a result the incentive program will connect to a TACO programme where the agent has entered all its incentive schemes with each airline. This ensures that the appropriate commission agreement for each airline can be accessed by the override program in order to calculate the commission for the travel agent irrespective of the airline.

Returning to figure 1, the forecast optimiser 202 is connected to a ticket or coupon database 206, which includes all the historical data of a travel agent. The historical date may include current levels of sales, averages for specific periods or any other appropriate information which relates to sales, targets and to a travel agent's activities. The forecaster and optimizer 202 predicts the gain expected for each airline based on the following formula:

$$\text{Expected gain (airline)} = \text{gain if threshold reached} * \text{probability of reaching threshold}$$

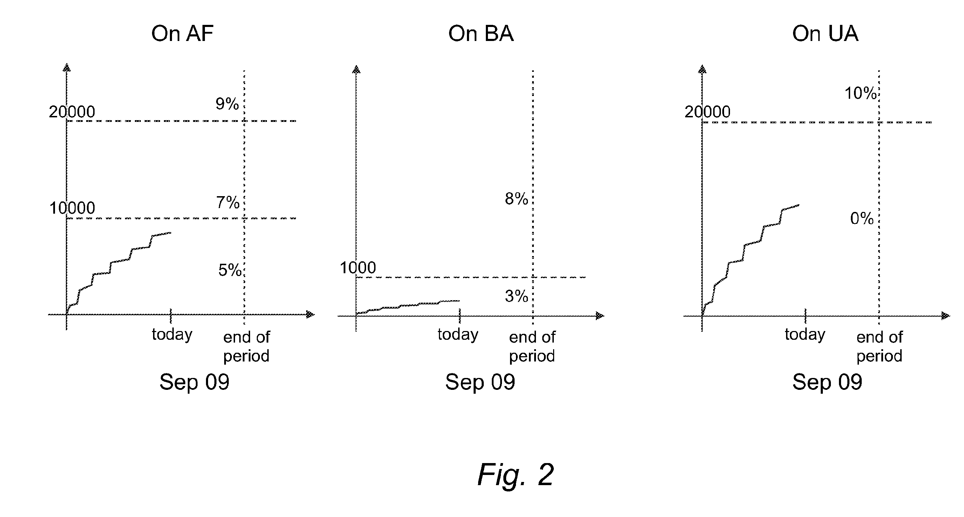

Figure 2 shows three examples of three different airlines showing different targets and time periods for achieving the target in order to assess the gain expected on each airline. The forecaster and optimiser may be modified by user inputs that tune the forecast based on user requirements. This may include favouring a particular airline over another based on security standards, quality of service, historical relationship etc. Alternatively the tuning may relate to the correction of historical sales based on forecasts for example for a new airline or new route.

Returning to figure 1 the ranking module 116 uses the output of the forecast optimizer to rank trips by putting those with the highest expected gain at the top of the list. The ranking module may also use criteria other than travel agent override commission to rank the trips. For example, the ranking module may combine a mix of TACO and price for the passenger to endeavour to optimise both. Instead of ranking the trips it may be possible to indicate the trips of interest by other means, for example grouping similar trips together or highlighting those that are of interest to the travel agent by any visual means. After all the processing has been completed, the results are processed by the coordinator in order to produce an output 208. The output identifies a flight, a route, a class, availability data, price and expected gain. The list is ordered such that the trip with the highest expected gain is presented first. Alternatively, the final ordering of the list of recommendations could be a compromise between the agent expected gain, the recommendation total price, and the best possible match of the requester/passenger options. Some ordering exceptions could be added for cases when several recommendations are similar.

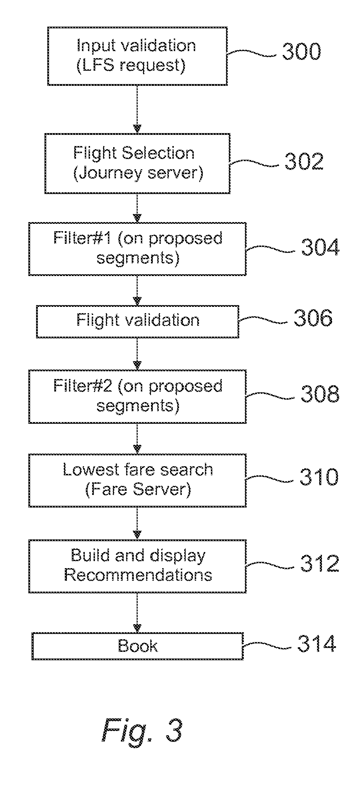

Referring to figure 3, the Low Fare Search (LFS) functionality to find low fare itinerary recommendations is described.

The Low fare search system takes into account any useful passenger information,taking into account the information requested, such as itinerary or date, the system retrieves a series of available travel solutions ordered by total fare. Fare or itinerary details can be viewed and recommendations can be booked directly (in case of an airline low fare search) or indirectly (in case of a meta search engine).

Returning to figure 3, in a first step 300 the low fare search request undergoes an input validation. In this step the system checks the user access rights and that the minimum content of the LFS request have been entered. The minimum content generally includes information including origin, destination, date, pax data, and fare information. In step 302 flight selection is established by means of a journey server. This entails obtaining airline preferences or Travel Management Company (TMC) preferences that are applicable to the request. With these preferences the flight selection module can search for applicable routes and travel solutions corresponding to the routes.

At step 304 a first filter is applied on proposed segments of the results. The filter may vary for different LFS engines. The typical filters that are applied at this stage include: new call preferences defined against regulations; screen padding and editing filters; airline preferences such as Carrier Preferred Display (CPD); and TMC preferences and Airline Preferences. At step 406 a flight validation process is carried out. Data relating to classes and corresponding availability status are received as part of this process. The data source will vary depending on the request and the flights required. In addition, options such as availability management; long haul; space; booking class adjustment may be validated at this stage. At step 308 a second filter is applied to proposed segments and may vary according to the type of LFS engine. At step 310 a lowest fare search is carried out by a fare server. A pricing engine builds recommendations based on validated travel solutions and applicable fares. A maximum number of recommendations may be defined. At step 312 recommendations are built and displayed by grouping recommendations and applying relevant sorting rules. If there are no possible recommendations an error message may be generated. At step 314 a travel agent or a customer can book a selected recommendation online or in any other appropriate manner.

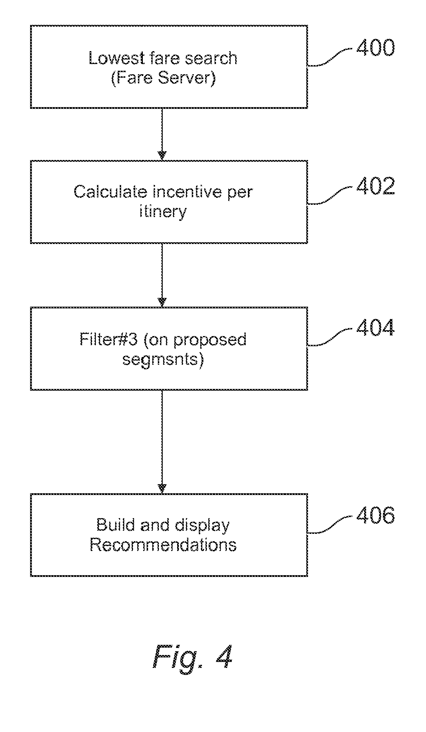

Referring now to figure 4, further steps relating to an additional module "Filter#3 (on proposed recommendations)" is described. The filter relies on recommendations returned by the fare server but also on calculations processed by the "incentive module" as described above.

This additional module determines the travel agent incentive value associated with each of the itineraries which satisfy the availability and low fare requested as a result of the LFS product and which allows the ranking of recommendations based on agent incentive agreement rules with an airline.

Referring to figure 4 the lowest fare search 400 is carried out as previously indicated with respect to figure 3. At step 402 the incentive per itinerary is evaluated. This is based on fare data present for each itinerary together with the travel agent sales history and incentive programme in order that an incentive can be evaluated for each recommendation. At step 404 the above-mentioned third filter is applied to the data. This enables the system to select proposed segments and ranking recommendations having the highest value for the travel agent according to the airline incentive agreements. The agreements may offer short-term, medium-term or long-term gain schemes or may offer other appropriate incentive agreements. At step 406 the recommendations are built and displayed in an appropriate manner. The incentive calculation enables an enhancement of the sorting processes for recommendations and can include several incentives rules between the agent and the relevant airlines, relating to maximisation of revenue for the travel agent.

The travel agency can define and explain which routes will be ranked first based on the defined incentives rules.

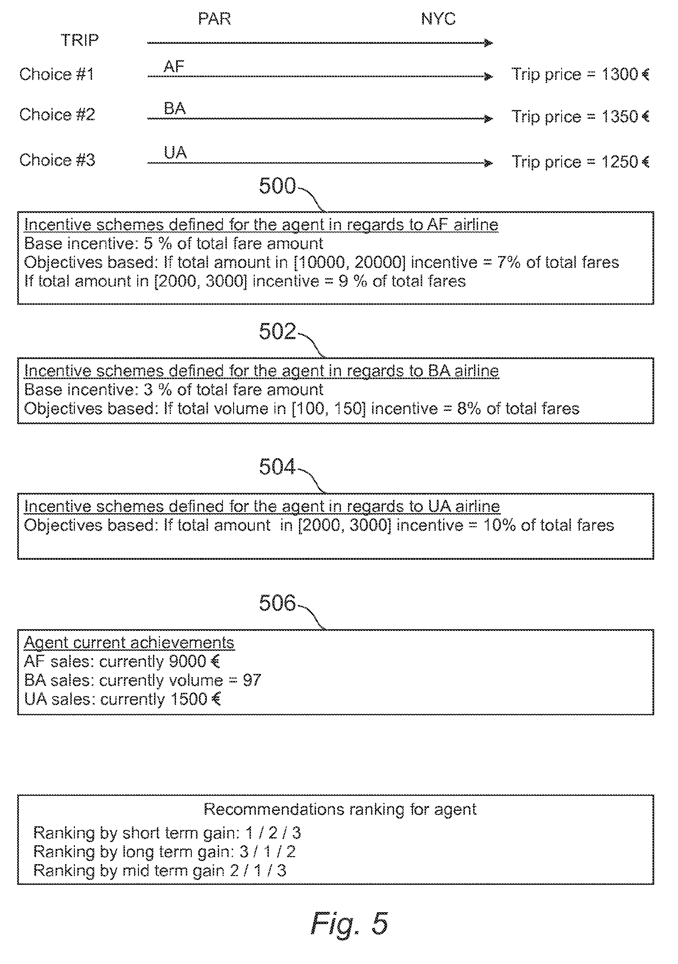

For example, these may include recommendations giving direct highest agent incentives (short term gain), maximizing the highest achievable defined incentive scheme (long term gain), and recommendations maximizing the closest achievable objective (middle term gain). This can be seen in figure 5. Figure 5 shows an example of a trip from Paris to New York. Three airlines (Air France #1, British Airways #2, United Airlines #3) propose different trip prices of, respectively, €1300, €1350, and €1250. The incentive calculation determines the incentive scheme for each airline (500, 502 and 504) and identifies current achievements (506). The results of the calculation at 508 show recommendations ranked based on short-term gain, long-term gain and medium-term gain. For each a different airline is the most appropriate in terms of incentive benefit to the travel agent.

For example, as a further improvement the following could also be envisaged: when the whole trip involves not only the validating airline, but also partners/competitors (so called 'participating airlines', using an interlining system) a global incentive could be determined which would be linked to revenue of all involved airlines participating in the trip. Hence the process of computing the final travel agent incentive would require an additional step to isolate each participant airline revenue. This could be referred to as an "incentive at coupon level" (i.e. from each airline involved in a segment of the trip) or an incentive at ticket level handled by validating airlines only. A so-called proration module would be required in this case. An agent incentive scheme definition process allows the agent to provide definitions in the Travel Agent IT system, as well as state which gain plan (short term / long term, other) is currently chosen. This choice can be updated at anytime.

A base (fixed) incentive together with (complex) objective based incentives (in terms of amount, volume, or otherwise) should be entered for each airline having an agreement with the agent. In the case of complex incentives rules the current recorded sales figures for the agent are then regularly compared with provided thresholds and a chosen gain plan so that the incentive module can rank the travel choices accordingly.

The schemes provided by the agent to the GDS can be summarized as follows:

For each airline providing incentive agreements, the travel agent provides:

Airline name;
Base (i.e. fixed) incentive;

List of complex incentives rules including threshold, unit, related incentive, etc.

The incentive module may include details of special events, entered by the travel agent or otherwise. For example, additional incentives may be added to encourage sales of tickets for a particular event, for example the World Cup, at least five months before the event. These special events may trigger additional thresholds and incentives which can be taken into account.

The incentive module may be a plug-in to any third party system.

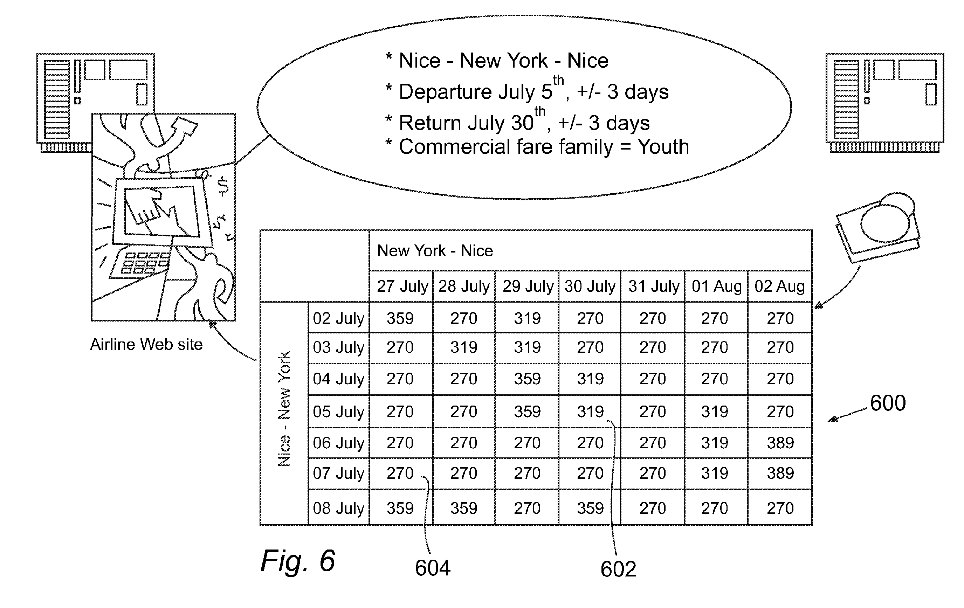

Figure 6 shows an output from the process described with reference to figures 3 and 4 which returns the available fare family with the lowest prices. For example a search for flights from Nice to New York returns the specific departure and return dates of recommendations 600. For a departure on July 5 and a return on July 30 the fare family having the lowest price and being available 602 has a price of €319. For a departure on July 7 and return on July 27 the fare family having the lowest price and being available 604 has a price of €270.

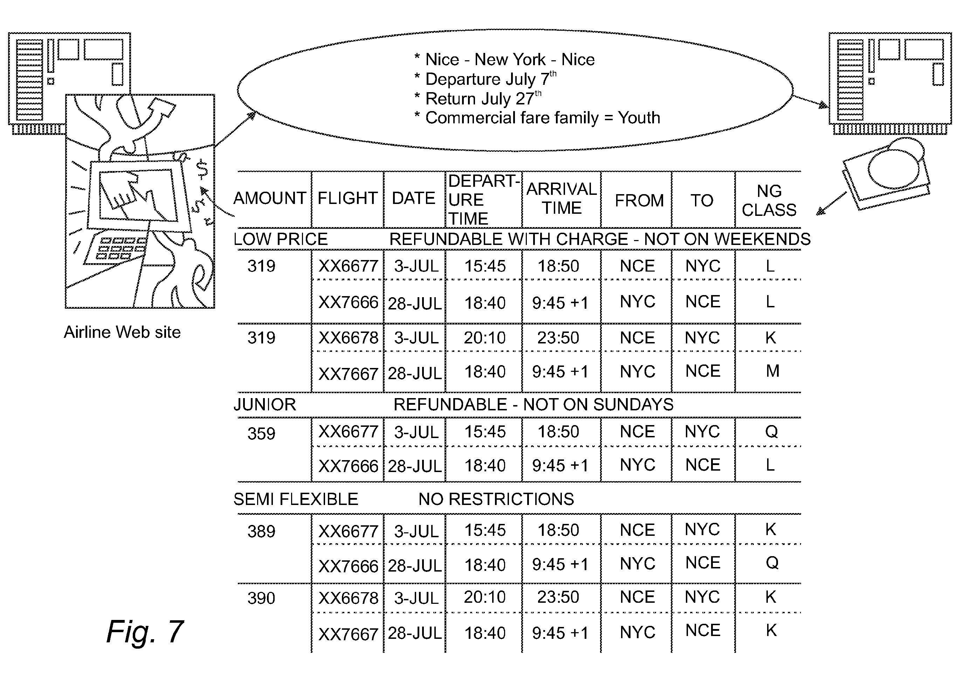

Once the end-user has selected the required travel dates the agent booking engine uses a pricing up feature. An up sell request is sent from the booking engine with the following data: itinerary, dates, fare families to be considered and passenger types. This produces the output as shown in figure 7 which indicates ability to refund and other flight information as can be seen in the table.

As previously indicated the incentive program can take many forms. For any particular travel booking there may be a number of different available incentive schemes the present invention uses specific processes to determine which of the incentive schemes offer the greatest benefit to the travel agent for each particular booking. This is accomplished in real-time. The resulting recommendations of any search are ordered in accordance with a specific algorithm based on the real-time calculation of the incentive module. The calculation looks at current levels of sales for each recommendation airline and compares this with various stored thresholds and associated time periods in order to determine whether the travel agent should recommend recommendations based on any particular incentive plan. In other words, if an agent is close to a threshold for a specific airline and the deadline for reaching that threshold is relatively short, the incentive module will select more recommendations from this specific airline in order to attempt to reach the threshold before the deadline expires. If there is more than one threshold and deadline approaching statistical analysis of the most likely to succeed is factored into the calculation. The preferences of a travel agent may be entered manually as previously indicated or could be determined based on impending deadlines and thresholds in a calculation based on all the relevant data. In addition, a weighting may be added to certain recommendations in order to force certain thresholds and deadlines to be met. This weighting may be mathematically determined or determined by means of manual inputs or forecasting.

The present invention makes a significant use of forecasting data and statistics. The historical travel agent data is used to determine trends and probabilities of certain levels of sales being achieved. This allows forecasts to be determined for specific airline. The comparison of thresholds and deadlines with a forecast can then be used to drive sales of certain tickets from certain airlines rather than others.

A person skilled in the art will understand that some or all of the functional entities as well as the processes themselves may be embodied in software, or one or more software-enabled modules and/or devices or in any combination thereof.

This invention has been described with reference to the purchase of tickets in the travel environment. However, it will be appreciated that the invention may apply to other environments, for example comparing prices for other goods and services and where a distributor receives incentive/commission from the supplier of goods and services.

It will be appreciated that this invention may be varied in many different ways and still remain within the intended scope of the invention.

**Claims**

1.    A method of determining a set of recommendations of possible available entities, such as tickets, wherein the set of recommendations are available for presentation to a user and match at least one search criteria entered by the user, wherein the search is conducted via a third-party which has a predetermined relationship with a supplier of the possible available entities; the method comprising the steps of:

     searching for a set of recommendations of possible available entities which match at least one search criteria entered by the user;
     determining an incentive scheme between the third-party and the supplier of the possible available entities for each possible available entity;
     forecasting an incentive for the third-party based on a predetermined incentive scheme for each possible available entity.

2.    The method of claim 1, further comprising ordering the recommendations of possible available entities in an order based on the incentive for the third-party for presentation to the user.

3.    The method of claim 2, wherein the ordering step comprises ranking the recommendations.

4.    The method of any preceding claim, wherein the forecasting comprises using historical sales and defined incentive schemes to determine the incentive.

5. The method of any preceding claim, further comprising defining the incentive schemes as a function of sales targets achievements.

6. A system for determining a set of recommendations of possible available entities, such as tickets, wherein the set of recommendations are available for presentation to a user and match at least one search criteria entered by the user, wherein the search is conducted via a third-party which has a predetermined relationship with a supplier of the possible available entities; the system comprising:

a searching module for searching for a set of recommendations of possible available entities which match at least one search criteria entered by the user; a processing module for determining an incentive scheme between third-party and the supplier of the possible available entities for each possible available entity; and for forecasting an incentive for the third-party based on a predetermined incentive scheme for each possible available entity.

7. The system of claim 6, further comprising an ordering module for ordering the recommendations of possible available entities in an order based on the incentive for the third-party, for presentation to the user.

8. The system of claim 7, wherein the ordering module ranks the recommendations.

9. The system of any of claims 6 to 8, wherein the forecasting module uses historical sales and defined incentive schemes to determine the incentive.

10. The system of any of claims 6 to 9, wherein the incentive scheme is a function of sales target achievement.

11. A computer program comprising instructions for carrying out the steps of the method according to any one of claims 1 to 5, when said computer program is executed on a computer system.

*Request:* low-fare & availability display on NCE-BKK. 01 JAN 09

108

*Response:* List of low-fare trips for NCE-BKK. 01 JAN 09 ranked by airlines priority

102

104

Connected to

Low fare search engine

200

114

Override program

requires

TACO program

204

Coordinator (may be driven by airlines business rules)

Forecaster and optimizer

requires

Historical sales data

206

Ranking module

112

116

202

100

Airlines' Inventory giving segments availability

106

EP 2 397 982 A1

8

*Fig. 1*

On AF

On BA

On UA

*Fig. 2*

EP 2 397 982 A1

```
┌─────────────────────────┐
│    Input validation     │ ── 300
│      (LFS request)      │
└─────────────────────────┘
             │
             ▼
┌─────────────────────────┐
│    Flight Selection     │ ── 302
│     (Journey server)    │
└─────────────────────────┘
             │
             ▼
┌─────────────────────────┐
│   Filter#1 (on proposed │ ── 304
│        segments)        │
└─────────────────────────┘
             │
             ▼
┌─────────────────────────┐
│     Flight validation   │ ── 306
└─────────────────────────┘
             │
             ▼
┌─────────────────────────┐
│   Filter#2 (on proposed │ ── 308
│        segments)        │
└─────────────────────────┘
             │
             ▼
┌─────────────────────────┐
│    Lowest fare search   │ ── 310
│      (Fare Server)      │
└─────────────────────────┘
             │
             ▼
┌─────────────────────────┐
│     Build and display   │ ── 312
│     Recommendations     │
└─────────────────────────┘
             │
             ▼
┌─────────────────────────┐
│          Book           │ ── 314
└─────────────────────────┘
```

*Fig. 3*

```
┌─────────────────────────┐
│   Lowest fare search    │──── 400
│     (Fare Server)       │
└─────────────────────────┘
             │
             ▼
┌─────────────────────────┐
│  Calculate incentive per │──── 402
│         itinery          │
└─────────────────────────┘
             │
             ▼
┌─────────────────────────┐
│   Filter#3 (on proposed  │──── 404
│        segmsnts)         │
└─────────────────────────┘
             │
             ▼
┌─────────────────────────┐
│    Build and display     │──── 406
│    Recommendations       │
└─────────────────────────┘
```

*Fig. 4*

TRIP     PAR           NYC

Choice #1   AF         Trip price = 1300 €

Choice #2   BA         Trip price = 1350 €

Choice #3   UA         Trip price = 1250 €

500

Incentive schemes defined for the agent in regards to AF airline
Base incentive: 5 % of total fare amount
Objectives based: If total amount in [10000, 20000] incentive = 7% of total fares
If total amount in [2000, 3000] incentive = 9 % of total fares

502

Incentive schemes defined for the agent in regards to BA airline
Base incentive: 3 % of total fare amount
Objectives based: If total volume in [100, 150] incentive = 8% of total fares

504

Incentive schemes defined for the agent in regards to UA airline
Objectives based: If total amount in [2000, 3000] incentive = 10% of total fares

506

Agent current achievements
AF sales: currently 9000 €
BA sales: currently volume = 97
UA sales: currently 1500 €

Recommendations ranking for agent
Ranking by short term gain: 1 / 2 / 3
Ranking by long term gain: 3 / 1 / 2
Ranking by mid term gain 2 / 1 / 3

*Fig. 5*

EP 2 397 982 A1

* Nice - New York - Nice

* Departure July 5th, +/- 3 days

* Return July 30th, +/- 3 days
* Commercial fare family = Youth

Airline Web site

| | | New York - Nice | | | | | | |
|---|---|---|---|---|---|---|---|---|
| | | 27 July | 28 July | 29 July | 30 July | 31 July | 01 Aug | 02 Aug |
| Nice - New York | 02 July | 359 | 270 | 319 | 270 | 270 | 270 | 270 |
| | 03 July | 270 | 319 | 319 | 270 | 270 | 270 | 270 |
| | 04 July | 270 | 270 | 359 | 319 | 270 | 270 | 270 |
| | 05 July | 270 | 270 | 359 | 319 | 270 | 319 | 270 |
| | 06 July | 270 | 270 | 270 | 270 | 270 | 319 | 389 |
| | 07 July | 270 | 270 | 270 | 270 | 270 | 319 | 389 |
| | 08 July | 359 | 359 | 270 | 359 | 270 | 270 | 270 |

600

604

602

Fig. 6

Airline Web site

* Nice - New York - Nice
* Departure July 7th
* Return July 27th
* Commercial fare family = Youth

| AMOUNT | FLIGHT | DATE | DEPART-URE TIME | ARRIVAL TIME | FROM | TO | NG CLASS |
|---|---|---|---|---|---|---|---|
| LOW PRICE | | | REFUNDABLE WITH CHARGE - NOT ON WEEKENDS | | | | |
| 319 | XX6677 | 3-JUL | 15:45 | 18:50 | NCE | NYC | L |
| | XX7666 | 28-JUL | 18:40 | 9:45 +1 | NYC | NCE | L |
| 319 | XX6678 | 3-JUL | 20:10 | 23:50 | NCE | NYC | K |
| | XX7667 | 28-JUL | 18:40 | 9:45 +1 | NYC | NCE | M |
| JUNIOR | | | REFUNDABLE - NOT ON SUNDAYS | | | | |
| 359 | XX6677 | 3-JUL | 15:45 | 18:50 | NCE | NYC | Q |
| | XX7666 | 28-JUL | 18:40 | 9:45 +1 | NYC | NCE | L |
| SEMI FLEXIBLE | | | NO RESTRICTIONS | | | | |
| 389 | XX6677 | 3-JUL | 15:45 | 18:50 | NCE | NYC | K |
| | XX7666 | 28-JUL | 18:40 | 9:45 +1 | NYC | NCE | Q |
| 390 | XX6678 | 3-JUL | 20:10 | 23:50 | NCE | NYC | K |
| | XX7667 | 28-JUL | 18:40 | 9:45 +1 | NYC | NCE | K |

Fig. 7

Europäisches
Patentamt

European
Patent Office

Office européen
des brevets

# EUROPEAN SEARCH REPORT

Application Number

EP 10 16 6301

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/145740 A1 (CLAVERIE BEATRICE [FR] ET AL) 10 June 2010 (2010-06-10)<br>* abstract *<br>* paragraph [0001] - paragraph [0036] *<br>* paragraph [0040] - paragraph [0061] *<br>----- | 1-11 | INV.<br>G06Q30/00 |
| X | WO 2009/137060 A2 (MOBISSIMO INC [US]; TARKA BEATRICE [US])<br>12 November 2009 (2009-11-12)<br>* abstract *<br>* paragraph [0003] - paragraph [0014] *<br>* paragraph [0019] - paragraph [0067] *<br>----- | 1-11 | |
| A | US 2006/190325 A1 (TARSH DAVID J [GB])<br>24 August 2006 (2006-08-24)<br>* abstract *<br>* paragraph [0002] - paragraph [0009] *<br>* paragraph [0063] - paragraph [0132] *<br>----- | 1-11 | |

TECHNICAL FIELDS
SEARCHED      (IPC)

G06Q

The present search report has been drawn up for all claims

| Place of search | Date of completion of the search | Examiner |
|---|---|---|
| The Hague | 28 September 2010 | Peelen, Bastien |

EPO FORM 1503 03.82 (P04C01)

**ANNEX TO THE EUROPEAN SEARCH REPORT
ON EUROPEAN PATENT APPLICATION NO.**

EP 10 16 6301

This annex lists the patent family members relating to the patent documents cited in the above-mentioned European search report.
The members are as contained in the European Patent Office EDP file on
The European Patent Office is in no way liable for these particulars which are merely given for the purpose of information.

28-09-2010

| Patent document cited in search report | | Publication date | Patent family member(s) | | Publication date |
|---|---|---|---|---|---|
| US 2010145740 | A1 | 10-06-2010 | EP<br>WO | 2207134 A1<br>2010066625 A1 | 14-07-2010<br>17-06-2010 |
| WO 2009137060 | A2 | 12-11-2009 | US | 2009281875 A1 | 12-11-2009 |
| US 2006190325 | A1 | 24-08-2006 | NONE | | |

EPO FORM P0459

For more details about this annex : see Official Journal of the European Patent Office, No. 12/82